# EUROPEAN PATENT APPLICATION

(11) **EP 4 585 344 A1**
(43) Date of publication of application: **16.07.2025**
(21) Application number: 24218314.3
(22) Date of filing: 09.12.2024
(51) Int. Cl.: B23K 9/10, B23K 9/28, B23K 9/32

(54) **WELDING-TYPE POWER SUPPLY CONNECTOR, WELDING-TYPE SYSTEM, AND POWER SUPPLY UNIT TO PROVIDE WELDING-TYPE POWER WITH EXTERIOR COOLANT ROUTE**

(30) Priority: 14.12.2023 US 202363610061 P; 02.12.2024 US 202418965432
(71) Applicant: Illinois Tool Works Inc., Glenview IL 60025 (US)
(72) Inventor: HOEGER, Michael, Glenview, 60025 (US)
(74) Representative: HGF

(57) **Abstract**

According to the present disclosure, a welding-type system (200) includes a cooler (120) configured to recirculate coolant from a welding-type tool (140) and comprises a cooler connection (126), a power supply (110) comprising power conversion circuitry configured to convert input power to welding-type power, and a bezel (112) comprising a power supply connector (116) and configured to provide a coolant path between the power supply connector (116) and the cooler connection (126). Further, a welding welding-type power supply connector (116) includes a gas connection configured to receive shielding gas, an outlet connection configured to provide coolant to a welding-type tool (140), and an inlet connection configured to receive the coolant from the welding-type tool (140), wherein the power supply connector (116) provides welding-type power.

## Description

### RELATED APPLICATIONS

The present application claims the benefit of U.S. Patent Application Serial No. 63/610,061, filed December 14, 2023, entitled "EXTERIOR COOLANT ROUTE FOR WELDING POWER SUPPLY." The entirety of U.S. Patent Application Serial No. 63/610,061 is expressly incorporated herein by reference.

### FIELD OF THE DISCLOSURE

This disclosure relates generally to power supplies and, more particularly, to power supplies with exterior coolant routes.

### BACKGROUND

Conventional power supplies utilize coolant that is provided to a welding torch and power cable through a coolant hose which is connected to a cooler. Typically, the coolant path is entirely independent of the welding power supply, thereby requiring separate connections for a coolant hose discharge, a coolant hose intake, shielding gas, and welding power, which requires connecting at multiple points on the welding power supply and on the cooler and creates significant complexity from a customer experience and manufacturing perspective.

### SUMMARY

Power supplies and external coolant routes are disclosed, substantially as illustrated by and described in connection with at least one of the figures, as set forth more completely in the claims.

### BRIEF DESCRIPTION OF THE DRAWINGS

FIG. 1 illustrates an example welding-type system, in accordance with aspects of this disclosure.
FIG. 2 is a block diagram of the example welding-type system of FIG. 1.
FIG. 3 is a perspective view of the example welding-type system of FIG. 2.
FIG. 4 is a detailed perspective view of FIG. 3.
FIG. 5 is a cross-section view of the example welding-type system of FIG. 2.
FIG. 6 is a detailed cross-section view of FIG. 5.
FIG. 7 is a front view of the example power supply connector, intake hose, and discharge hose of the example welding-type system of FIG. 4.
FIG. 8A is a cross-section view of FIG. 7.
FIG. 8B is a second cross-section view of FIG. 7.
FIG. 9 is a third cross-section view of the example welding-type system of FIG. 7.
FIG. 10 is a flowchart representative of an example method to construct the example welding-type system of FIG. 2.

The figures are not necessarily to scale. Where appropriate, similar or identical reference numbers are used to refer to similar or identical components.

### DETAILED DESCRIPTION

For the purpose of promoting an understanding of the principles of this disclosure, reference will be now made to the examples illustrated in the drawings and specific language will be used to describe the same. It will nevertheless be understood that no limitation of the scope of the claims is intended by this disclosure. Modifications in the illustrated examples and such further applications of the principles of this disclosure as illustrated therein are contemplated as would typically occur to one skilled in the art to which this disclosure relates.

Disclosed example welding-type systems route coolant lines from a cooler into a bezel of the welding power supply. The bezel provides a coolant path between the cooler and the welding power supply that is hidden in an assembled state. Additionally, the coolant path within the bezel to a weld power connector is contained within a water tight portion of the bezel so that accidental ingress of coolant into the welding power supply is not possible, and so that any leaks will drain externally.

Disclosed example welding-type systems provide a connector that includes all-in-one shielding gas, coolant inlet and outlet, and weld current which can quickly be connected to the power supply and cooler. Disclosed example connectors and welding-type systems prevent operator error, decreases the number of connections for a water cooled torch from four connections to 1, and occupy a smaller space on a power supply and/or cooler.

As used herein, the word "exemplary" means "serving as an example, instance, or illustration." The examples described herein are not limiting, but rather are exemplary only. It should be understood that the described examples are not necessarily to be construed as preferred or advantageous over other examples. Moreover, the terms "examples of the invention," "examples," or "invention" do not require that all examples of the invention include the discussed feature, advantage, or mode of operation.

Disclosed example welding-type power supply connectors include: a gas connection configured to receive shielding gas, an outlet connection configured to provide coolant to a welding-type tool, and an inlet connection configured to receive the coolant from the welding-type tool, wherein the power supply connector provides welding-type power. Some example welding-type power supply connectors include a threaded connector that comprises the gas connection, the outlet connection, and the inlet connection. Some example welding-type power supply connectors include a toolless connector that comprises the gas connection, the outlet connection, and the inlet connection.

Disclosed example welding-type power supply connectors connect the shielding gas, the welding-type power, and the coolant to a power supply. Some example welding-type power supply connectors include a wire connection to connect welding wire.

Disclosed example welding-type systems include a cooler configured to recirculate coolant from a welding-type tool and comprising a cooler connection, a power supply comprising power conversion circuitry configured to convert input power to welding-type power, and a bezel comprising a power supply connector and configured to provide a coolant path between the power supply connector and the cooler connection, wherein the power supply connector provides the welding-type power to the welding-type tool.

Some example power supply connectors include a gas connection configured to receive shielding gas, an outlet connection configured to provide coolant, and an inlet connection configured to receive the coolant. Some example power supply connectors are arranged within the bezel and the power supply. Some example power supply connector include a seal. In some example welding-type systems, the coolant path is external to an enclosure containing the power conversion circuitry. In some example welding-type systems, the coolant path extends through a portion of the bezel which is sealed against fluid ingress into the power supply. In some example welding-type systems, the cooler includes one or more openings to receive the coolant path. In some example welding-type systems, the bezel is configured to drain fluid outside of the power supply. In some example welding-type systems, the coolant path comprises a coolant discharge and a coolant intake. In some example welding-type systems, the cooler connection comprises one or more openings in the cooler to receive the coolant path from the bezel. In some example welding-type systems, the power supply is configured to provide power to the cooler. In some example welding-type systems, the power supply connector connects the shielding gas, the welding-type power, and the coolant to the power supply. In some example welding-type systems, the welding-type tool is a water-cooled torch.

Disclosed example power supplies include power conversion circuitry configured to convert input power to welding-type power, a power supply connector, and a bezel configured to provide a coolant path between the power supply connector and a cooler, wherein the power supply connector provides the welding-type power to the welding-type tool. In some example power supplies, the power supply connector provides shielding gas, the welding-type power, and the coolant to a welding-type tool.

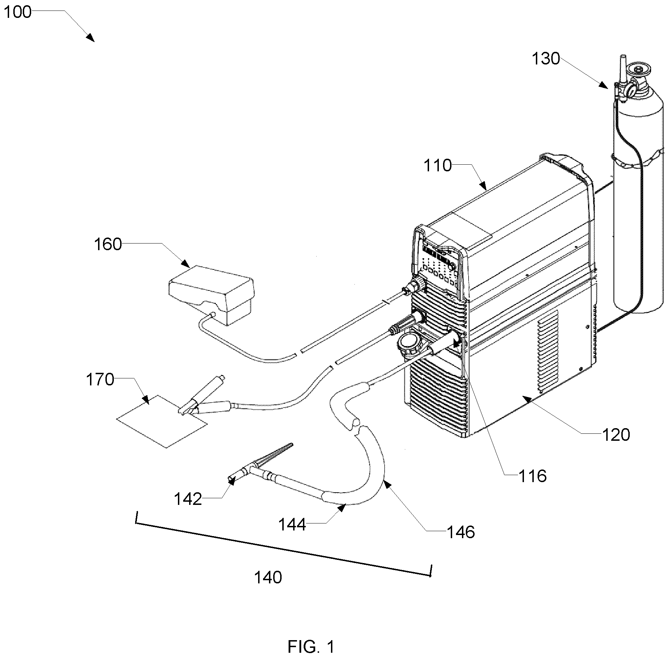

FIG. 1 illustrates an example welding-type system 100. The example welding type system 100 of FIG. 1 includes a power supply 110 for delivery of welding power, a cooler 120, and a gas source 130 for delivery of shielding gas. A welding type-tool, such as a gas tungsten arc welding (GTAW) torch, a wire-fed welding torch 140 (e.g., a torch to perform gas metal arc welding (GMAW), flux cored arc welding (FCAW), etc.), a plasma cutting torch, a carbon arc cutting torch, a gouging torch, and/or any other welding-type tool, may be connected to the power supply 110. In some examples, a welding wire source 150 may also provide welding wire for certain types of welding.

The example welding torch 140 includes a torch head 142 and a torch body 144. A welding cable 146 conducts welding power, shielding gas, welding wire, and/or coolant from the power supply connector 116 to the torch body 144 for delivery to the torch head 142. A remote control 160, and a ground clamp 170 may also be connected to the power supply 110.

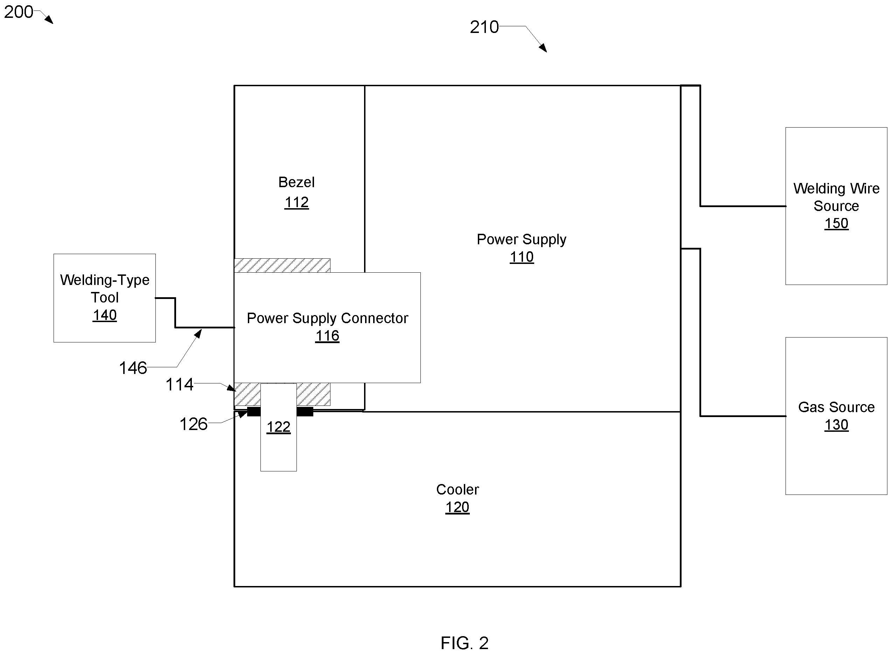

In some examples, the power supply 110 directly supplies input power to the welding-type tool. In the illustrated example, the power supply 110 is configured to supply power to welding operations and/or preheating operations. The example power supply 110 may also provide power to a wire feeder (described further with regards to FIG. 2) in order to supply electrode wire to the welding torch 140 for various welding applications (e.g., GMAW welding, flux core arc welding (FCAW)), in which case wire is also routed from the wire feeder through the power supply to the power supply connector 116. The power supply 110 receives the shielding gas from the gas source and routes the shielding gas to the power supply connector 116. The power supply may include additional connections for the remote control 160 and/or the ground clamp 170.

The power supply 110 includes a controller (not shown) to control the operation of the power supply 110. The controller may also include interface circuitry for communicating data to other devices in the system, such as the welding wire source 150 or other welding-type devices. For example, in some situations, power supply 110 wirelessly communicates with other welding devices within the welding system. Further, in some situations, the power supply 110 communicates with other welding devices using a wired connection, such as by using a network interface controller (NIC) to communicate data via a network (e.g., ETHERNET, 10baseT, 10base100, etc.).

The cooler 120 provides coolant to and from the welding torch 140. The coolant provided by the cooler 120 may be ethylene glycol or propylene glycol. In some examples, the cooler 120 is integrated with the power supply 110 or mounted to the power supply 110 as illustrated in FIG. 2. However, the cooler 120 may be independent from the power supply or attached in a different configuration (e.g., adjacent to the power supply 110, etc.). In some examples, the cooler 120 is powered by the power supply 110. In some other examples, the cooler 120 is powered by a separate power connection independent from the power supply 110.

FIG. 2 is a block diagram 200 of the example welding type system 100 of FIG. 1, including a power supply 110, a cooler 120, a gas source 130, and/or a welding wire source 150. The power supply 110 may be mounted on the cooler 120 as illustrated in FIG. 2, or the power supply 110 and cooler 120 may be separate components. In some examples, the power supply 110, cooler 120, bezel 112, and power supply connector 116 are attached and/or mounted together to form a power supply unit 210.

A bezel 112 and a power supply connector 116 may be attached and/or mounted onto the power supply 110. In some examples, the bezel 112 is formed and then attached to the power supply connector 112. For example, the bezel 112 may be formed of a similar or different material than the power supply 110 and may cover a whole side of the power supply 110. In some examples, the bezel 112 may be attached to the power supply 110 via a latching mechanism, a hooking mechanism, a clasping mechanism, as non-limiting examples. In some examples, the bezel 112 may be integrated with the power supply 110. In some other examples, the bezel 112 may be part of the power supply 110.

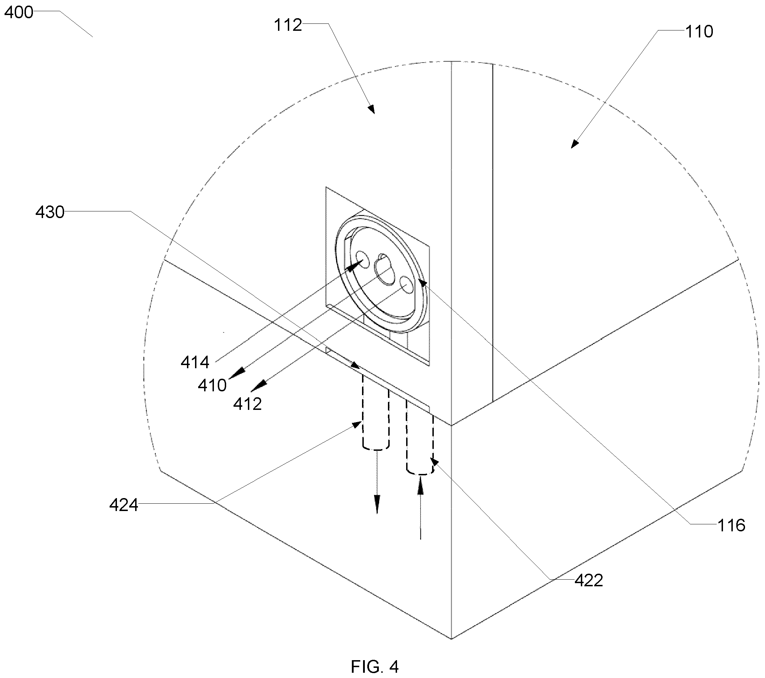

The power supply connector 116 may provide shielding gas, coolant, and/or welding wire to the welding torch 140 and may be enclosed in a pocket 114 arranged in a portion of the bezel 112. The power supply connector 116 may be installed in an opening or outlet in the bezel 112 and the power supply 110. The power supply connector 116 may be installed in the pocket 114 of the bezel and extend into the power supply 110. A coolant path 122 extends from the power supply connector 116 to the cooler 120 via one or more openings 126 in the cooler 120. The coolant path 122 may include tubing to intake cold coolant from the cooler 120 and tubing to provide hot coolant returned from the welding torch 140 through the welding cable 146 and power supply connector 116 to the cooler 120 and will be further described below with regards to FIG. 4.

The gas source 130 may provide shielding gas to the power supply 110 which is routed to the power supply connector 116. In some examples, the welding wire source 150 is also connected to the power supply 110 and the wire is routed to the power supply connector 116. The power supply connector 116 may provide the shielding gas, the coolant, and/or the welding wire to the welding cable 146 which in turn provides the shielding gas, coolant, and/or welding wire to the welding torch 140. Compared to conventional coolers, the single power supply connector 116 involves fewer connection pieces to manufacture and one point of connection between the welding torch 140 and the power supply 110.

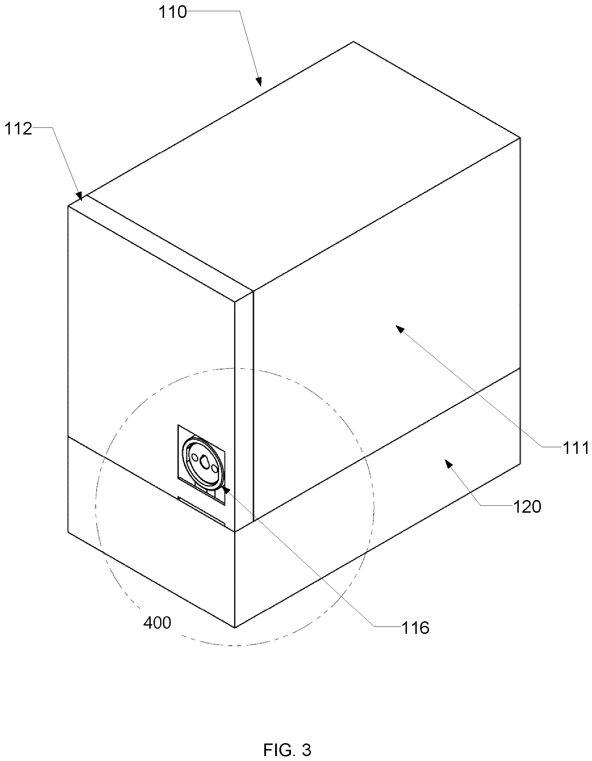

FIG. 3 is a perspective view of the example welding-type system of FIG. 2. FIG. 4 is a detailed perspective view of FIG. 3. The power supply 110 includes a bezel 112 and a power supply connector 116. As illustrated, the power supply connector 116 may be arranged within a portion of the bezel 112. The power supply connector 116 may be located in a lower portion 400 of the bezel 112. As illustrated, the power supply connector 116 is located at a lower portion of the bezel 112 and near a first side 111 of the power supply 110. However, the power supply connector 116 may be located on and/or near other sides of the power supply 110.

FIG. 4 is a detailed perspective view of FIG. 3 and depicts the lower portion 400 of the bezel in more detail. As illustrated, the power supply connector 116 of the power supply 110 comprises a gas connection 410, and coolant connections to and from the welding torch 140 (e.g., coolant connections 412 and 414). The power supply connector 116 supplies coolant from the cooler 120 to the welding torch 140 such as described above in FIGS. 1 and 2. The power supply 110 provides cold coolant via coolant connection 412, and the welding torch 140 returns hot coolant via coolant connection 414.

The power supply connector 116 includes intake hose 422 to intake cold coolant from the cooler 120 and discharge hose 424 to discharge hot coolant from the power supply connector 116 to the cooler 120. Although intake hose 422 is described as intake tubing to receive cold coolant from the cooler at the power supply connector 116 and discharge hose 424 is described as discharging hot coolant from the power supply connector 116 to the cooler 120, intake hose 422 may discharge hot coolant back to the cooler 120 and discharge hose 424 may provide coolant from the power supply connector 116 to the cooler 120. In some examples, a segment of each of the intake hose 422 and discharge hose 424 is located within the power supply connector 116, a second segment of each of the intake hose 422 and discharge hose 424 is located within the bezel 112, and a third segment of each of the intake hose and discharge hose 424 is located within the cooler 120.

A discharge slot 430 may be provided in order to drain excess coolant and/or moisture from the pocket 114 of the bezel 112 into the environment. The discharge slot 430 may be placed below the power supply connector 112, at a lowest portion of the bezel 116 in order to allow moisture to drain. The power supply connector 116 may include a seal, valve, or other device, such as a Schrader or similar valve that may be used to prevent accidental leakage of the coolant or other moisture externally from the power supply connector 116.

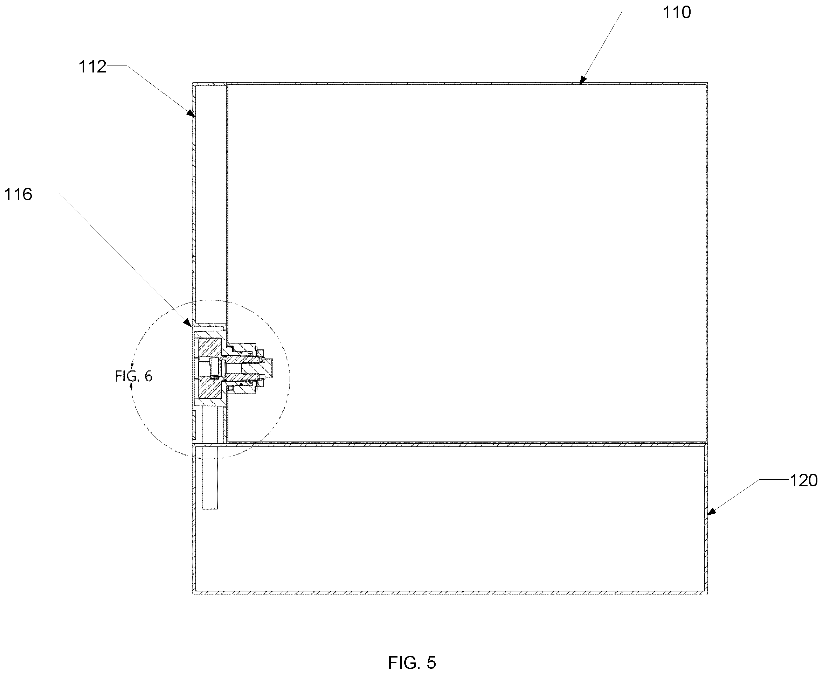

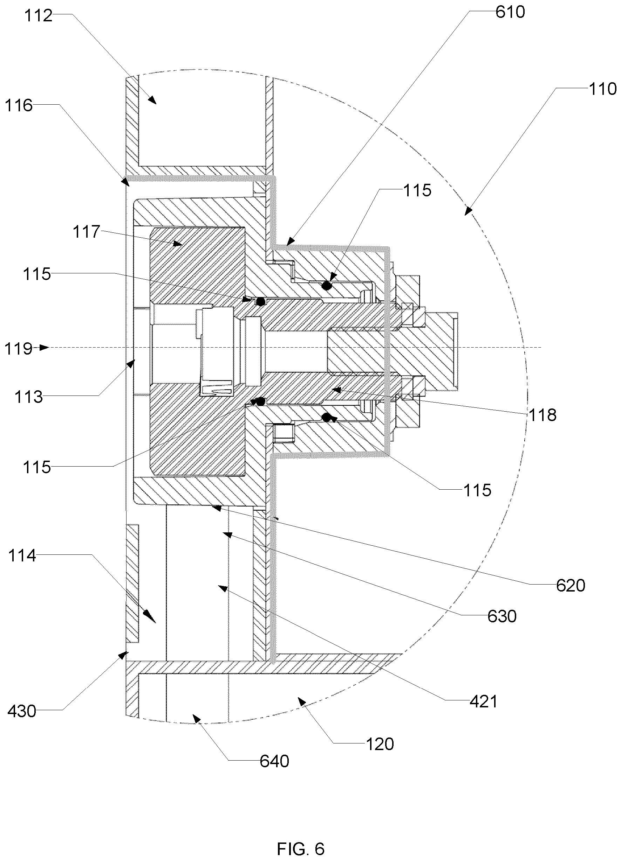

FIG. 5 is a cross-section view of the example welding-type system of FIG. 2. FIG. 6 is a detailed cross-section view of FIG. 5. As illustrated in FIG. 5, the power supply connector 116 is arranged within a bezel 112 of the power supply 110 and provides a coolant path to the cooler 120. As illustrated in FIG. 6, the bezel includes a pocket 114, such as the pocket 114 described above with regards to FIG. 2, which includes a moisture barrier 610 surrounding the power supply connector 116 along the inside of the pocket 114. The moisture barrier 610 is resistant to moisture and ensures the power supply 110 remains dry.

In some examples, the pocket 114 includes a discharge slot 430 at a lower portion of the pocket. The discharge slot 430 may be located at any lower portion of the pocket 114. In some examples, the discharge slot 430 is located at any point in the bezel 112 below the power supply connection 116. The discharge slot 430 may be located on either of the sides that makes up the pocket 114 of the bezel 112.

In some examples, the power supply connector 116 is arranged partially within the bezel 112 and partially within the power supply 110. In some examples, the power supply connector 116 comprises a first portion 117 that is arranged within the bezel 116. A second portion 118 of the power supply connector 116 is arranged within the power supply 110. The power supply connector 116 may be made of conductive material through a center axis 119, and may utilize a pin or other type of connector that couples to the power supply 110 to receive welding-type power. In some examples, the face 113 of the power supply connector 116 is made of a conducive material, such as brass, copper, etc. In some examples, the power supply connector 116 includes one or more seals 115, such as an O-ring, washer, or similar seal to prevent shielding gas and/or coolant from leaking outside of the power supply connector 116. Additionally or alternatively, the power supply connector 116 may include a Schrader or similar valve that may be used to prevent leakage of fluid.

In some examples, the power supply connector 116 is a toolless connector so that an operator is able to attaching a welding cable 146 to the power supply connector without using any tools. In some examples, the power supply connector 116 is a threaded connector that receives a threaded welding cable 146. In some examples, the power supply connector 116 may receive a welding cable 146 that is latched or clamped on, as non-limiting examples.

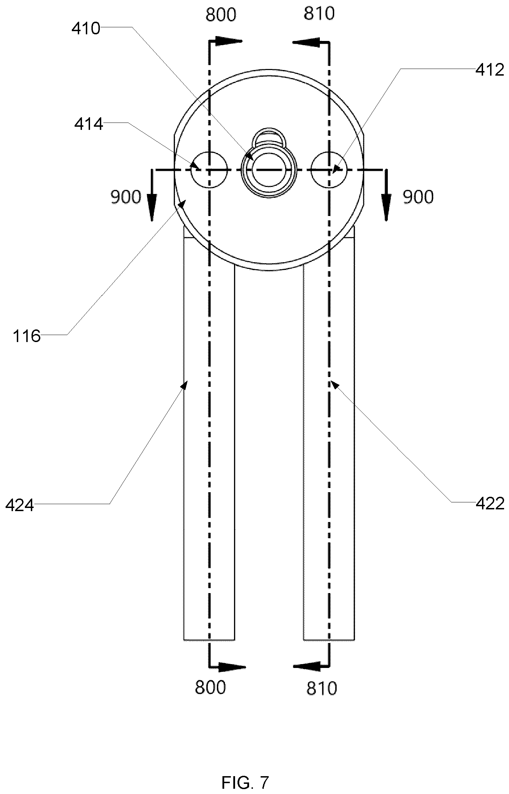

In some examples, the power supply connector 116 includes tubing 421 that that connects to an underside 620 of the power supply connector 116 in order to provide a coolant path 421 from to the cooler 120 to the power supply connector 116. The coolant path 421 illustrated may be the coolant intake hose 422 or the coolant discharge hose 424 described above with regards to FIG. 4. In some examples, the cooler 120 comprises one or more openings 126 to receive the tubing 421 from the power supply connector 116. In some examples, a segment (not shown) of each of the intake hose 422 and discharge hose 424 is located within the power supply connector 116, a second segment 630 of each of the intake hose 422 and discharge hose 424 is located within the bezel 112, and a third segment 640 of each of the intake hose and discharge hose 424 is located within the cooler 120. The coolant path 421 of the power supply connector 116 is described in further detail below in relation to FIGS. 7-9.

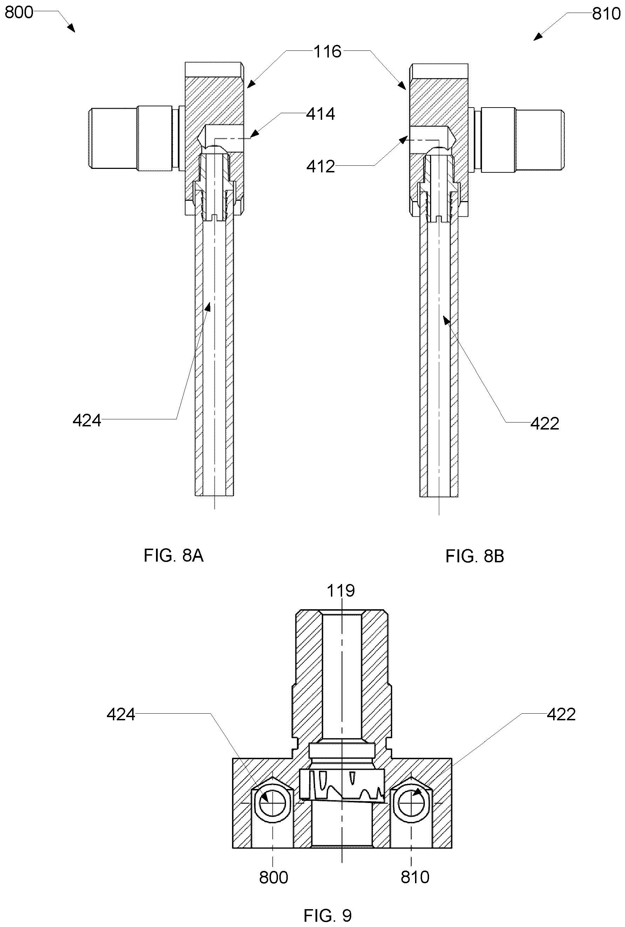

FIG. 7 is a front view of the example power supply connector 116 including the intake hose 422 and discharge hose 424 of the example welding-type system of FIG. 4. FIGs. 8A and 8B are side cross-section views 800, 810 of the example power supply connector of FIG. 7. FIG. 9 is a top cross-section view 900 of the example power supply connector of FIG. 7. Referring to FIGs. 7-9, the power supply connector 116 includes a gas connection 410, a hot coolant connection 414, and a cold coolant connection 412. The cold coolant connection 412 and hot coolant connection 414 route coolant to and from the cooler 120 using the discharge hose 424 and intake hose 422, respectively. The intake hose 422 and discharge hose 424 are connected to the cold and hot coolant connections 412 and 414 and are placed substantially perpendicular to the hot and cold coolant connections 412 and 414. The cold and hot coolant connections 412 and 414 include apertures in the power supply connector 116 and a passage that lead to the intake hose 422 and discharge hose. In some examples, the intake hose 422 and discharge hose 424 are substantially perpendicular to the hot and cold coolant connections 412 and 414. The intake hose 422 and discharge hose 424 lead to and away from the cooler 120 described above with reference to FIG. 2.

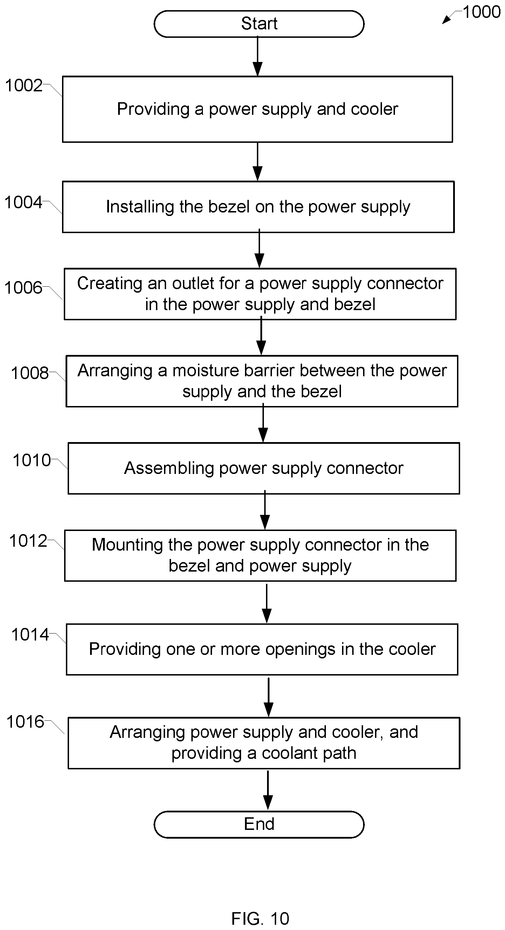

FIG. 10 is a flowchart representative of an example method 1000 to construct the example power supply connector 116 of FIG. 2. While the method 1000 illustrates an example order of blocks or steps, the order of some of the blocks may be modified, or blocks may be divided or combined as appropriate. The example method 1000 is described below with reference to the example cable and components of FIGS. 1-9, but may be modified as appropriate for other implementations.

Block 1002 involves providing a power supply 110 and a cooler 120. For example, a power supply 110 and cooler can be provided separately, or the power supply can be mounted on a side of the cooler. Block 1004 involves installing the bezel 112 on a side of the power supply 110. The bezel 112 may be installed on a portion of a side of the power supply 110. In some examples, the bezel 112 may be installed on a complete side of the power supply 110. In some examples, the bezel 112 may be installed on the power supply 110 and include a side (or portion of a side) of the cooler 120.

Block 1006 involves creating an outlet or aperture for a power supply connector 116 in the power supply 110 and bezel 112. Block 1008 involves arranging a moisture barrier between the power supply and the bezel 112. Block 1010 involves assembling the power supply connector 116. Block 1012 involves mounting the power supply connector 116 in the bezel 112 and power supply 110.

Subsequently, at block 1014, one or more openings are provided in the cooler for the coolant path from the power supply connector 116 in the power supply 110 to the cooler. For example, one or more openings may be created to insert tubing for a coolant path from the power supply connector 116 to the cooler 120.

At block 1016, the power supply 110 and cooler 120 are arranged so that the power supply connector 116 is located in the bezel 112 of the power supply 110 and provides coolant to and from the cooler 120 via a coolant path 122. In some examples, the power supply 110 is mounted on the cooler 120. In some other examples, the power supply 110 may be adjacent or near the cooler in a different configuration. The power supply 110 may be placed so that tubing for the coolant path is arranged in the one or more openings of the cooler 120 in order for coolant to be sent to and from the cooler 120 to the power supply connector 116.

As utilized herein, "and/or" means any one or more of the items in the list joined by "and/or". As an example, "x and/or y" means any element of the three-element set {(x), (y), (x, y)}. In other words, "x and/or y" means "one or both of x and y." As another example, "x, y, and/or z" means any element of the seven-element set {(x), (y), (z), (x, y), (x, z), (y, z), (x, y, z)}. In other words, "x, y, and/or z" means "one or more of x, y and z". As utilized herein, the term "exemplary" means serving as a non-limiting example, instance, or illustration. As utilized herein, the terms "e.g." and "for example" set off lists of one or more non-limiting examples, instances, or illustrations. As utilized herein, circuitry is "operable" to perform a function whenever the circuitry comprises the necessary hardware and code (if any is necessary) to perform the function, regardless of whether performance of the function is disabled or not enabled (e.g., by an operator-configurable setting, factory trim, etc.).

While the present method and/or system has been described with reference to certain implementations, it will be understood by those skilled in the art that various changes may be made and equivalents may be substituted without departing from the scope of the present method and/or system. In addition, many modifications may be made to adapt a particular situation or material to the teachings of the present disclosure without departing from its scope. For example, block and/or components of disclosed examples may be combined, divided, re-arranged, and/or otherwise modified. Therefore, the present method and/or system are not limited to the particular implementations disclosed. Instead, the present method and/or system will include all implementations falling within the scope of the appended claims, both literally and under the doctrine of equivalents. Certain embodiments of the invention are described in the following clauses:
Clause 1. A welding-type power supply connector comprising:
   a gas connection configured to receive shielding gas;
   an outlet connection configured to provide coolant to a welding-type tool; and
   an inlet connection configured to receive the coolant from the welding-type tool,
   wherein the power supply connector provides welding-type power.
Clause 2. The power supply connector of clause 1, wherein the power supply connector is a threaded connector that comprises the gas connection, the outlet connection, and the inlet connection.
Clause 3. The power supply connector of clause 1, wherein the power supply connector is a toolless connector that comprises the gas connection, the outlet connection, and the inlet connection.
Clause 4. The power supply connector of clause 1, wherein the power supply connector connects the shielding gas, the welding-type power, and the coolant to a power supply.
Clause 5. The power supply connector of clause 1, further comprising a wire connection to connect welding wire.
Clause 6. A welding-type system comprising:
   a cooler configured to recirculate coolant from a welding-type tool and comprising a cooler connection;
   a power supply comprising power conversion circuitry configured to convert input power to welding-type power; and
   a bezel comprising a power supply connector and configured to provide a coolant path between the power supply connector and the cooler connection,
   wherein the power supply connector provides the welding-type power to the welding-type tool.
Clause 7. The welding-type system of clause 6, wherein the power supply connector comprises:
   a gas connection configured to receive shielding gas;
   an outlet connection configured to provide coolant; and
   an inlet connection configured to receive the coolant.
Clause 8. The welding-type system of clause 6, wherein the power supply connector is arranged within the bezel and the power supply.
Clause 9. The welding-type system of clause 6, wherein the power supply connector comprises a seal.
Clause 10. The welding-type system of clause 6, wherein the coolant path is external to an enclosure containing the power conversion circuitry.
Clause 11. The welding-type system of clause 6, wherein the coolant path extends through a portion of the bezel which is sealed against fluid ingress into the power supply.
Clause 12. The welding-type system of clause 6, wherein the cooler comprises one or more openings to receive the coolant path from the bezel.
Clause 13. The welding-type system of clause 6, wherein the bezel is configured to drain fluid from a portion of the bezel external to the power supply.
Clause 14. The welding-type system of clause 6, wherein the coolant path comprises a coolant discharge and a coolant intake.
Clause 15. The welding-type system of clause 6, wherein the power supply is configured to provide power to the cooler.
Clause 16. The welding-type system of clause 6, wherein the power supply connector connects shielding gas, the welding-type power, and the coolant to the power supply.
Clause 17. The welding-type system of clause 6, wherein the welding-type tool is a water-cooled torch.
Clause 18. A power supply unit to provide welding-type power comprising:
   power conversion circuitry configured to convert input power to the welding-type power;
   a power supply connector; and
   a bezel configured to provide a coolant path between the power supply connector and a cooler, wherein the power supply connector provides the welding-type power to a welding-type tool.
Clause 19. The power supply unit of clause 18, wherein the power supply connector further provides shielding gas and coolant to a the welding-type tool.
Clause 20. The power supply unit of clause 18, wherein the power supply connector further comprises:
   a gas connection configured to receive shielding gas;
   an outlet connection configured to provide coolant to the welding-type tool; and
   an inlet connection configured to receive the coolant from the welding-type tool.

## Claims

1. A welding-type power supply connector comprising:
a gas connection configured to receive shielding gas;
an outlet connection configured to provide coolant to a welding-type tool; and
an inlet connection configured to receive the coolant from the welding-type tool,
wherein the power supply connector provides welding-type power.

2. The power supply connector of claim 1, wherein the power supply connector is a threaded connector that comprises the gas connection, the outlet connection, and the inlet connection.

3. The power supply connector of claim 1, wherein the power supply connector is a toolless connector that comprises the gas connection, the outlet connection, and the inlet connection.

4. The power supply connector of claim 1, wherein the power supply connector connects the shielding gas, the welding-type power, and the coolant to a power supply.

5. The power supply connector of claim 1, further comprising a wire connection to connect welding wire.

6. A welding-type system comprising:
a cooler configured to recirculate coolant from a welding-type tool and comprising a cooler connection;
a power supply comprising power conversion circuitry configured to convert input power to welding-type power; and
a bezel comprising a power supply connector and configured to provide a coolant path between the power supply connector and the cooler connection,
wherein the power supply connector provides the welding-type power to the welding-type tool.

7. The welding-type system of claim 6, wherein the power supply connector comprises:
a gas connection configured to receive shielding gas;
an outlet connection configured to provide coolant; and
an inlet connection configured to receive the coolant.

8. The welding-type system of claim 6, wherein the power supply connector is arranged within the bezel and the power supply, or
wherein the power supply connector comprises a seal.

9. The welding-type system of claim 6, wherein the coolant path is external to an enclosure containing the power conversion circuitry, or
wherein the coolant path extends through a portion of the bezel which is sealed against fluid ingress into the power supply.

10. The welding-type system of claim 6, wherein the cooler comprises one or more openings to receive the coolant path from the bezel, or
wherein the bezel is configured to drain fluid from a portion of the bezel external to the power supply.

11. The welding-type system of claim 6, wherein the coolant path comprises a coolant discharge and a coolant intake, or
wherein the power supply is configured to provide power to the cooler.

12. The welding-type system of claim 6, wherein the power supply connector connects shielding gas, the welding-type power, and the coolant to the power supply, or
wherein the welding-type tool is a water-cooled torch.

13. A power supply unit to provide welding-type power comprising:
power conversion circuitry configured to convert input power to the welding-type power;
a power supply connector; and
a bezel configured to provide a coolant path between the power supply connector and a cooler, wherein the power supply connector provides the welding-type power to a welding-type tool.

14. The power supply unit of claim 13, wherein the power supply connector further provides shielding gas and coolant to a the welding-type tool.

15. The power supply unit of claim 13, wherein the power supply connector further comprises:
a gas connection configured to receive shielding gas;
an outlet connection configured to provide coolant to the welding-type tool; and
an inlet connection configured to receive the coolant from the welding-type tool.
